# EUROPEAN PATENT APPLICATION

(11) **EP 2 756 880 A1**
(43) Date of publication of application: **23.07.2014**
(21) Application number: 12831873.0
(22) Date of filing: 11.09.2012
(51) Int. Cl.: B01J 8/24

(54) **POWDER-PROCESSING DEVICE AND POWDER-PROCESSING METHOD**

(30) Priority: 12.09.2011 JP 2011198187
(71) Applicant: Toyo Tanso Co., Ltd., Osaka-shi Osaka 555-0011 (JP)
(72) Inventor: TANAKA, Noriyuki, Osaka-shi Osaka 555-0011 (JP); HIRAIWA, Jiro, Osaka-shi Osaka 555-0011 (JP); MUKAI, Takahiro, Osaka-shi Osaka 555-0011 (JP)
(74) Representative: TBK
(86) International application number: PCT/JP2012/005756
(87) International publication number: WO 2013/038658

(57) **Abstract**

A processing space is provided in a reaction container. One gas inlet port is provided at the lower end of the reaction container. A distribution plate is attached to the one gas inlet port. Another gas inlet port is provided at a lower side surface of the reaction container. Powder that is an object to be processed is stored on the distribution plate in the reaction container. The distribution plate is configured to let a gas pass and not let the powder pass. A nitrogen gas is introduced into the processing space through the distribution plate from the one gas inlet port, and a processing gas is introduced into the processing space from the other gas inlet port without passing through the distribution plate.

## Description

### [Technical Field]

The present invention relates to a powder processing apparatus that performs a process of powder, and a powder processing method.

### [Background Art]

Conventionally, a process of powder is performed using a processing gas such as a fluorine gas. In order to increase the processing efficiency, it is required to efficiently bring the processing gas and the powder into contact with each other. In the processing method of a carbon nano-structure powder described in Patent Document 1, a surface process of the carbon nano-structure powder is performed using a fluorine gas, for example, as the processing gas (the reaction gas). In this case, a carrier gas is supplied into a reactor through a filter from a lower portion of the reactor, whereby a fluidization region in which the carrier gas flows upward is formed in the reactor. In that state, the processing gas is supplied into the reactor through the filter from the lower portion of the reactor. Thus, in the fluidization region, the carbon nano-structure powder and the processing gas can be efficiently brought into contact with each other.
[Patent Document 1] JP 2005-1980 A

### [Summary of Invention]

### [Technical Problem]

In the above-mentioned processing method, however, because the processing gas is mixed with the carrier gas, and is supplied to the carbon nano-structure powder in a diluted state, the processing efficiency of the carbon nano-structure powder cannot be sufficiently increased. It is considered that the concentration of the processing gas is increased in order to increase the processing efficiency. As the processing gas, however, a highly reactive gas is often used. In a case in which the powder is processed using such a processing gas, when the concentration of the processing gas is increased, a dust explosion is more likely to occur. In particular, when the powder is fluidized, static electricity occurs due to friction, so that a dust explosion is likely to occur. Therefore, it is necessary to lower the concentration of the processing gas in order to ensure safety, so that the processing efficiency of the powder is reduced.

An object of the present invention is to provide a powder processing apparatus and a powder processing method in which processing efficiency of powder is sufficiently increased while safety is ensured.

### [Solution to Problem]

(1) According to one aspect of the present invention, a powder processing apparatus that performs a process of powder that is an object to be processed by a processing gas includes a reaction container that has a processing space in which the powder is stored, wherein a first gas introduction port for introduction of the processing gas into the processing space is provided at a first position of the reaction container, and a second gas introduction port for introduction of a diluent gas into the processing space is provided at a second position different from the first position of the reaction container.

In the powder processing apparatus, the powder is stored in the processing space of the reaction container. The processing gas is introduced into the processing space from the first gas introduction port of the reaction container, and the diluent gas is introduced into the processing space from the second gas introduction port of the reaction container. In this case, the powder can be fluidized in the processing space by the diluent gas. Thus, the processing gas can be efficiently brought into contact with the powder, and the processing efficiency of the powder can be increased.

Further, in the processing space, because the processing gas is diluted by the diluent gas, the overall concentration of the processing gas is kept low. Thus, an occurrence of a dust explosion is prevented, and safety is ensured. On the other hand, because the first and second gas introduction ports are respectively provided at the first and second positions different from each other, the processing gas and the diluent gas can be respectively separately introduced into the processing space. Thus, the processing gas having high concentration before being diluted by the diluent gas can be brought into contact with the powder. Therefore, the processing efficiency of the powder can be sufficiently increased while safety is ensured.

The above-mentioned diluent gas only has to be able to dilute the processing gas and fluidize the powder, and preferably has low reactivity not to influence the process of the powder and not to generate an explosion. Further, the diluent gas may be a mixed gas made of a plurality of types of gases.

(2) The second gas introduction port may be provided at a lower portion of the processing space such that the diluent gas is introduced upward into the processing space.

In this case, the diluent gas is introduced upward from a lower portion of the processing space with the powder being gathered at the lower portion of the processing space due to gravity. Thus, the entire powder can be easily fluidized. Therefore, the powder can be more efficiently and evenly processed.

(3) The powder processing apparatus may further include a ventilation member that is provided at the second gas introduction port and is configured to let the diluent gas pass and not let the powder pass.

In this case, because the ventilation member is provided at the second gas introduction port, the diluent gas is introduced from the second gas introduction port, whereby the powder is prevented from remaining on the ventilation member. Therefore, the powder is prevented from adhering to the ventilation member due to the reaction with the processing gas, and is prevented from being excessively processed on the ventilation member. Thus, the entire powder can be evenly processed.

In particular, in a case in which the second gas introduction port is provided at a lower portion of the processing space, the powder is gathered on the ventilation member due to gravity. Even in this case, the diluent gas is introduced from the second gas introduction port, so that the powder is prevented from remaining on the ventilation member. Therefore, adherence of the powder to the ventilation member and the excessive process of part of the powder are prevented, and the entire powder can be evenly processed.

(4) The powder processing apparatus may further include a vibration generating device that supplies vibration to the reaction container.

In this case, the reaction container vibrates, so that the powder is more sufficiently fluidized in the processing space. Thus, the processing gas can be efficiently brought into contact with the powder, so that the processing efficiency of the powder can be sufficiently increased.

(5) The processing gas may include a fluorine gas.

In this case, because the processing gas is diluted by the diluent gas, the fluorine concentration in the entire processing space is kept low. Thus, an occurrence of a dust explosion is prevented, and safety is ensured. On the other hand, because the processing gas and the diluent gas are individually introduced into the processing space, the processing gas having high fluorine concentration can be brought into contact with the powder. Therefore, the processing efficiency of the powder by the fluorine gas can be sufficiently increased while safety is ensured.

(6) According to another aspect of the present invention, a powder processing method that performs a process of powder that is an object to be processed by a processing gas includes the steps of storing the powder in a processing space of a reaction container, and introducing the processing gas into the processing space from a first gas introduction port provided at a first position of the reaction container, and introducing a diluent gas into the processing space from a second gas introduction port provided at a second position different from the first position of the reaction container.

In the powder processing method, the powder is stored in the processing space of the reaction container. The processing gas is introduced into the processing space from the first gas introduction port of the reaction container, and the diluent gas is introduced into the processing space from the second gas introduction port of the reaction container. In this case, the powder can be fluidized in the processing space due to the diluent gas. Thus, the processing gas can be efficiently brought into contact with the powder, and the processing efficiency of the powder can be increased.

Further, in the processing space, because the processing gas is diluted by the diluent gas, the overall concentration of the processing gas is kept low. Thus, an occurrence of a dust explosion is prevented, and safety is ensured. On the other hand, because the first and second gas introduction ports are respectively provided at the first and second positions different from each other, the processing gas and the diluent gas are individually introduced into the processing space. Thus, the processing gas having high concentration before being diluted by the diluent gas can be brought into contact with the powder. Therefore, the processing efficiency of the powder can be sufficiently increased while safety is ensured.

It is preferable that the concentration of the processing gas is appropriately adjusted to a value at which a dust explosion does not finally occur in the processing space in consideration of safety and the processing efficiency.

(7) The processing gas may include a fluorine gas.

In this case, because the processing gas is diluted by the diluent gas, the fluorine concentration in the entire processing space is kept low. Thus, an occurrence of a dust explosion is prevented, and safety is ensured. On the other hand, because the processing gas and the diluent gas are individually introduced into the processing space, the processing gas having high fluorine concentration can be brought into contact with the powder. Therefore, the processing efficiency of the powder by a fluorine gas can be sufficiently increased while safety is ensured.

### [Advantageous Effects of Invention]

The present invention enables the processing efficiency of the powder to be sufficiently increased while safety is ensured.

### [Brief Description of Drawings]

[FIG. 1] FIG. 1 is a schematic side view showing the configuration of a powder processing apparatus according to one embodiment of the present invention.
[FIG. 2] FIG. 2 is a schematic cross sectional view showing the configuration of the powder processing apparatus used in a comparative example.

### [Description of Embodiments]

A powder processing apparatus and a powder processing method according to embodiments of the present invention will be described below with reference to drawings.

### (1) Configuration

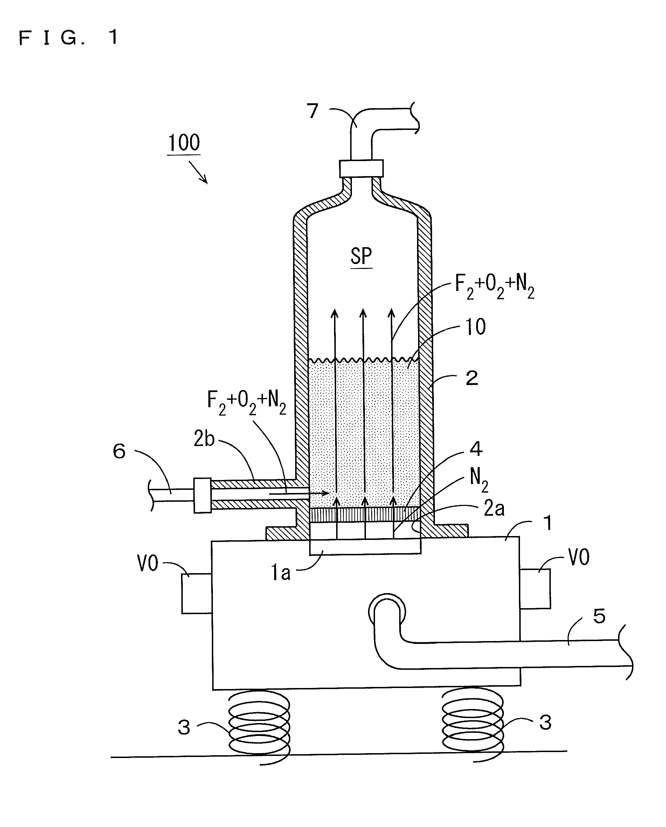

Fig. 1 is a schematic side view showing the configuration of the powder processing apparatus according to one embodiment of the present invention. As shown in Fig. 1, the powder processing apparatus 100 has a gas supplier 1 and a reaction container 2. The gas supplier 1 is supported by a plurality of springs 3. A plurality of vibration generating devices VO are attached to the gas supplier 1. Each vibration generating device VO includes a vibration motor, for example. Each vibration generating device VO is operated, so that the gas supplier 1 and the reaction container 2 vibrate. Further, a gas supply pipe 5 is connected to the gas supplier 1. An inert gas is supplied to the gas supplier 1 as a diluent gas through the gas supply pipe 5. In the present embodiment, a nitrogen (N₂) gas is used as the diluent gas. A gas outlet port 1a is provided at the upper surface of the gas supplier 1. The nitrogen gas supplied through the gas supply pipe 5 is blown out upward from the gas outlet port 1a.

The reaction container 2 has a substantially cylindrical shape that extends vertically. In the reaction container 2, a processing space SP is provided. A gas inlet port 2a is provided at the lower end of the reaction container 2. The reaction container 2 is attached to the upper surface of the gas supplier 1 such that the gas inlet port 2a overlaps with the gas outlet port 1 a of the gas supplier 1. A distribution plate (a ventilation member) 4 is attached to the gas inlet port 2a. In the processing space SP, powder 10 that is an object to be processed is stored on the distribution plate 4 in the processing space SP. As the powder 10, an organic compound or an inorganic compound that can be processed by a gas is used, and resin powder, ceramic powder or metal powder, for example, is used. More specifically, resin powder made of a polyester resin, a polyethylene resin or an acrylic resin, a pigment or the like is used. The distribution plate 4 has netlike or porous configuration such that a gas can pass and the powder 10 cannot pass. The nitrogen gas blown out from the gas outlet port 1a of the gas supplier 1 is introduced into the reaction container 2 through the distribution plate 4 from the gas inlet port 2a, and flows from the lower end towards the upper end of the reaction container 2. The distribution plate 4 preferably has a rectifying function such that the diluent gas is evenly introduced into the processing space SP through the entire transverse cross section of the gas inlet port 2a. The powder is likely to be more evenly fluidized in the processing space SP due to this distribution plate 4.

A gas inlet port 2b is provided at the lower side surface of the reaction container 2. The gas inlet port 2b is located at a position higher than the gas inlet port 2a. A gas inlet pipe 6 is connected to the gas inlet port 2b. A processing gas is introduced from the gas inlet port 2b through the gas inlet pipe 6. In the present embodiment, a mixed gas made of a fluorine (F₂) gas, an oxygen (O₂) gas and a nitrogen (N₂) gas is used as the processing gas. An outlet pipe 7 is connected to the upper end of the reaction container 2. A gas is discharged from the reaction container 2 through the outlet pipe 7. The gas discharged from the reaction container 2 is discarded or reused. When the gas to be used is detrimental, a processing device that detoxifies the gas may be installed at this outlet pipe 7.

### (2) Surface Process of Powder

In the powder processing apparatus 100 of Fig. 1, the surface process of the powder 10 stored in the processing space SP of the reaction container 2 is performed. The details will be described below.

A nitrogen gas is introduced into the processing space SP through the distribution plate 4 from the gas inlet port 2a, and the processing gas is introduced into the processing space SP from the gas inlet port 2b without passing through the distribution plate 4 with the powder 10 being stored on the distribution plate 4 in the reaction container 2. Further, each vibration generating device VO is operated, so that the gas supplier 1 vibrates. Accordingly, the vibration is added to the reaction container 2 on the gas supplier 1. The vibration generating device VO is used to finally vibrate the powder 10 and facilitate the fluidization of the powder 10.

In this case, a flow rate of the nitrogen gas introduced from the gas inlet port 2a is set to a value enough to fluidize the powder, and is set to a value larger than the flow rate of the processing gas, for example. That is, an upward flow of gas is formed in the processing space SP, so that the powder 10 is fluidized in the processing space SP. Further, the vibration is added to the reaction container 2, so that the powder vibrates and the powder 10 is more easily fluidized in the processing space SP. In that state, the processing gas comes into contact with the powder 10, and the surface process of the powder 10 is performed. As in the present example, when the processing gas including an oxygen gas and a fluorine gas as a processing component is used, a terminal group of the molecular on the surface of the powder becomes -CF=O due to a fluorine gas and an oxygen gas and then becomes a hydrophilic group such as a carboxyl group by being hydrolyzed. As a result, the hydrophilicity of the powder 10 is improved.

### (3) Dust Explosion

In order to efficiently perform the surface process of the powder 10, the fluorine concentration and the oxygen concentration are respectively preferably increased. However, a dust explosion may occur in the reaction container 2 during the surface process of the powder 10. The higher the fluorine concentration and the oxygen concentration respectively are, the higher the occurrence possibility of an explosion is. Therefore, it is necessary to respectively keep the fluorine concentration and the oxygen concentration low.

In the present embodiment, the processing gas and the diluent gas are individually introduced into the processing space SP. Even if the concentration of the processing gas is high, the processing gas is immediately diluted by the nitrogen gas that is used as the diluent gas. Thus, the overall fluorine concentration and the oxygen concentration in the processing space SP are kept low, so that an occurrence of an explosion is prevented. That is, in the reaction container 2, the processing gas respectively having the high fluorine concentration and the high oxygen concentration that is introduced from the gas inlet port 2b comes into contact with the powder 10. Therefore, because the powder 10 is processed by the processing gas having high concentration, the efficiency of the surface process can be increased. In this manner, the efficiency of the surface process of the powder 10 can be increased while an occurrence of an explosion is prevented.

Because the gas inlet port 2b is provided a region in which the powder 10 is stored in the processing space SP in the present embodiment in particular, the processing gas introduced from the gas inlet port 2b directly comes into contact with the powder 10. Therefore, the efficiency of the surface process of the powder 10 can be more sufficiently increased.

If the processing gas is diluted by the diluent gas, so that the fluorine concentration and the oxygen concentration in the processing space SP are kept at values at which the possibility of an explosion is not present, the fluorine concentration and the oxygen concentration of the processing gas may be set to values at which an explosion may occur. In this case, the efficiency of the surface process of the powder 10 can be sufficiently increased while an occurrence of an explosion is prevented.

### (4) Effects

In the powder processing apparatus 100 according to the present embodiment, the processing gas is introduced from the gas inlet port 2b to the processing space SP of the reaction container 2, and a nitrogen gas that is the diluent gas is introduced from the gas inlet port 2a to the processing space SP of the reaction container 2 through the distribution plate 4. Thus, the processing gas can be brought into contact with the powder 10 while the powder 10 is fluidized in the processing space SP by the nitrogen gas. Therefore, the processing gas can be efficiently brought into contact with the surface of the powder 10, and the efficiency of the surface process of the powder 10 can be increased.

Further, the processing gas is diluted by the nitrogen gas in the processing space SP. Thus, the concentration of the processing gas in the processing space SP is kept low. Therefore, an occurrence of a dust explosion is prevented, and safety is ensured. On the other hand, the processing gas and the inert gas are respectively introduced into the processing space SP from the gas inlet ports 2a, 2b that are different from each other. Thus, the processing gas that has high concentration before being diluted by the inert gas can be brought into contact with the powder 10. Therefore, the efficiency of the surface process of the powder 10 can be sufficiently increased while safety is ensured.

Further, because the processing gas is introduced into the processing space SP without passing through the distribution plate 4, the surface process is inhibited from being performed on the powder 10 being in contact with the distribution plate 4. Thus, the powder 10 is inhibited from adhering to the distribution plate 4. As a result, the surface process can be evenly performed on the entire powder 10.

### (5) Other Embodiments

While a mixed gas made of a fluorine gas, an oxygen gas and a nitrogen gas is used as the processing gas in the above-mentioned embodiment, the invention is not limited to this. Another processing gas may be used. For example, a mixed gas made of a fluorine gas and a nitrogen gas may be used as the processing gas. In this case, it is possible to increase the hydrophobicity of the powder 10 by performing the surface process of the powder 10. Further, if an occurrence of a dust explosion is prevented, the processing gas does not have to include a nitrogen gas. Further, the processing gas that does not include a fluorine gas such as an ozone gas may be used.

While a nitrogen gas is used as the diluent gas in the above-mentioned embodiment, the invention is not limited to this. Another gas such as an inert gas having low reactivity such as a helium (He) gas or an argon (Ar) gas may be used.

If the powder 10 can be processed by the processing gas while being fluidized by the diluent gas in the processing space SP, the distribution plate 4 does not have to be provided. Alternatively, the positions of the gas inlet ports 2a, 2b may be appropriately changed.

While the plate-shaped distribution plate 4 is used as the ventilation member in the above-mentioned embodiment, the invention is not limited to this. The ventilation member having another shape such as a sheet-shape, a block-shape or the like may be used.

While an opening area of the gas inlet port 2a is set to be larger than an opening area of the gas inlet port 2b, and the diluent gas is introduced into the processing space SP through the gas inlet port 2a from the gas supplier 1 in the example of Fig. 1, the invention is not limited to this. If the distribution plate 4 has the rectifying function, the opening area of the gas inlet port 2a may be set to be small similarly to the opening area of the gas inlet port 2b, and the gas inlet pipe 6 may be directly connected to the gas inlet port 2a. In this case, even if the flow of the diluent gas is not adjusted by the gas supplier 1, the diluent gas introduced into the processing space SP from the gas inlet pipe 6 through the gas inlet port 2a is rectified by the distribution plate 4. Therefore, the powder 10 can be easily fluidized. Further, if the gas inlet pipe 6 is directly connected to the gas inlet port 2a in this manner, the vibration generating device VO may be provided to directly vibrate the reaction container 2. Thus, the powder 10 can be more easily fluidized.

### (6) Inventive Examples and Comparative Examples

### (6-1) Inventive Examples

The surface process of powder 10 was performed by the powder processing apparatus 100 according to the above-mentioned embodiment. 1 kg of FASTOGEN Super Magenta RTS manufactured by DIC Corporation was used as the powder 10. As a processing gas, a mixed gas made of a fluorine gas, an oxygen gas and a nitrogen gas was used. Out of the processing gas, the flow rate of the fluorine gas was set to 0.10 (L(litre)/min), the flow rate of the oxygen gas was set to 0.38 (L(litre)/min) and the flow rate of the nitrogen gas was set to 35 (L(litre)/min). Further, the flow rate of the nitrogen gas as the diluent gas was set to 120 (L(litre)/min).

### (6-2) Comparative Example

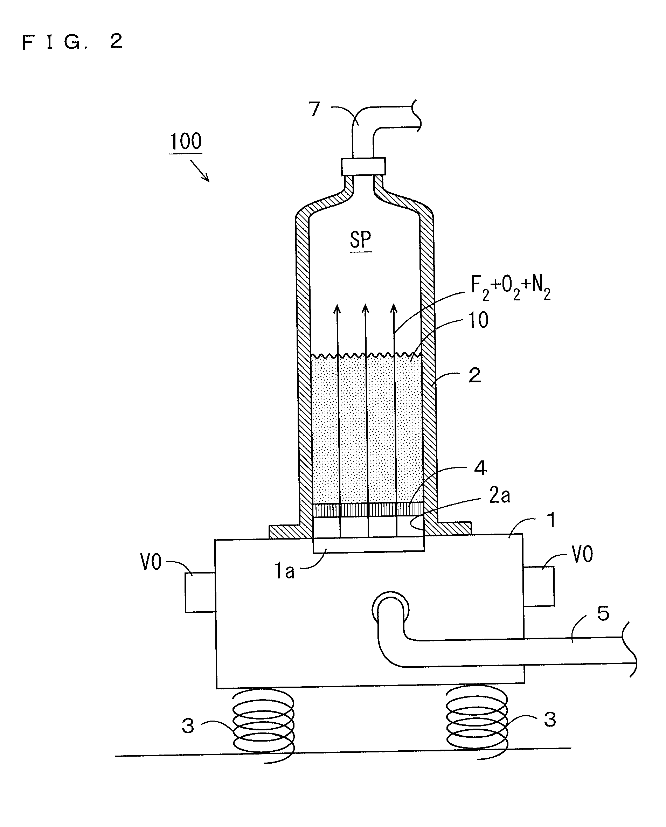

Fig. 2 is a schematic cross sectional view showing the configuration of a powder processing apparatus 100 used for the comparative example. Regarding the powder processing apparatus 100 of Fig. 2, difference from the powder processing apparatus 100 according to the above-mentioned embodiment will be described. In the powder processing apparatus 100 of Fig. 2, a reaction container 2 does not have a gas inlet port 2b. A mixed gas (a processing gas) made of a fluorine gas, an oxygen gas and a nitrogen gas is introduced into the processing space SP through the gas inlet port 2a from the gas outlet port 1a of the gas supplier 1.

The surface process of the powder 10 was performed by the powder processing apparatus 100 of Fig. 2. The type and amount of the powder 10 is the same as the above-mentioned inventive example. Out of the mixed gas blown out from the gas outlet port 1a of the gas supplier 1, the flow rate of the fluorine gas was set to 0.10 (L(litre)/min), the flow rate of the oxygen gas was set to 0.38 (L(litre)/min) and the flow rate of the nitrogen gas was set to 155 (L(litre)/min).

### (6-3) Evaluation

### (6-3-1) Hydrophilicity

In the above-mentioned inventive example and comparative example, the processing time period was set to 6 hours, 9 hours and 13 hours, and the hydrophilicity of the processed powder 10 was examined.

Specifically, 20 mL of pure water was put into a sampling bottle, 4 mg of the processed powder 10 was set afloat on the water surface and they were left for a predetermined amount of time. In this case, the higher the hydrophilicity of the powder 10 is, the easier the powder 10 is to be dispersed in the water. In the inventive example, in a case in which the processing time period was set to 9 hours and in a case in which the processing time period was set to 13 hours, the entire powder 10 was dispersed in the water. On the other hand, in the comparative example, only when the processing time period was set to 13 hours, the entire powder 10 was dispersed in the water. Accordingly, it was found that the processing gas and the diluent gas are separately introduced into the reaction container 2, whereby the efficiency of the surface process of the powder 10 is increased.

### (6-3-2) Explosive Limit

In accordance with 'lowest explosive concentration measurement method of an explosive dust' (standard number; JISZ8818) of JIS standard, the relation between an occurrence of an explosion, and the fluorine concentration and the oxygen concentration was examined using a blow-up type device (see 'lowest explosive concentration measurement method of an explosive dust 7. Blown-up type device'). Specifically, a mixed gas made of a fluorine gas, an oxygen gas and a nitrogen gas was introduced into the blown-up type device, and the powder 10 was fluidized. The fluorine concentration in the mixed gas was set to 0.2 %, and the oxygen concentration in the mixed gas and the amount of the powder 10 were set to various values.

As a result, it was found that in a case in which the fluorine concentration is 0.2 %, if the oxygen concentration is not more than 0.5 %, an explosion does not occur regardless of the amount of the powder 10, and if the oxygen concentration is higher than 0.5 %, an explosion may occur depending on the amount of the powder 10. Further, it is considered that in a case in which the fluorine concentration is higher than 0.2 %, even if the oxygen concentration is not more than 0.5 %, an explosion may occur.

In the inventive example, the fluorine concentration of the processing gas is 0.28 %, and the oxygen concentration of the processing gas is 1.07 %. Therefore, the values of the fluorine concentration and the oxygen concentration of the processing gas may be explosive. On the other hand, the processing gas is diluted by the diluent gas, so that the fluorine concentration in the processing space SP is 0.07 %, and the oxygen concentration in the processing space SP is 0.25 %. Therefore, the fluorine concentration and the oxygen concentration in the processing space SP are kept at values that are not explosive. In this manner, it was found that the fluorine concentration and the oxygen concentration of the processing gas are set to potentially explosive values, and the fluorine concentration and the oxygen concentration in the reaction container 2 are kept at values that are not explosive, whereby the efficiency of the surface process of the powder 10 is increased while an occurrence of an explosion is prevented. The final fluorine concentration and the oxygen concentration in the processing space SP are the same for the inventive example and the comparative example.

### (7) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the powder 10 is an example of powder, the processing space SP is an example of a processing space, the gas inlet port 2b is an example of a first gas introduction port, the gas inlet port 2a is an example of a second gas introduction port, the reaction container 2 is an example of a reaction container, the distribution plate 4 is an example of a ventilation member and the vibration generating device VO is an example of a vibration generating device.

As each of various elements recited in the claims, various other elements having configurations or functions described in the claims can be also used.

### [Industrial Applicability]

The present invention can be effectively utilized for various powder processing apparatuses that perform a surface process of powder.

## Claims

1. A powder processing apparatus that performs a process of powder that is an object to be processed by a processing gas, comprising:
a reaction container that has a processing space in which the powder is stored, wherein
a first gas introduction port for introduction of the processing gas into the processing space is provided at a first position of the reaction container, and a second gas introduction port for introduction of a diluent gas into the processing space is provided at a second position different from the first position of the reaction container.

2. The powder processing apparatus according to claim 1, wherein
the second gas introduction port is provided at a lower portion of the processing space such that the diluent gas is introduced upward into the processing space.

3. The powder processing apparatus according to claim 1, further comprising:
a ventilation member that is provided at the second gas introduction port and is configured to let the diluent gas pass and not let the powder pass.

4. The powder processing apparatus according to claim 1, further comprising:
a vibration generating device that supplies vibration to the reaction container.

5. The powder processing apparatus according to claim 1, wherein
the processing gas includes a fluorine gas.

6. A powder processing method that performs a process of powder that is an object to be processed by a processing gas, comprising the steps of:
storing the powder in a processing space of a reaction container; and
introducing the processing gas into the processing space from a first gas introduction port provided at a first position of the reaction container, and introducing a diluent gas into the processing space from a second gas introduction port provided at a second position different from the first position of the reaction container.

7. The powder processing method according to claim 6, wherein
the processing gas includes a fluorine gas.
